(19) **Europäisches Patentamt / European Patent Office / Office européen des brevets**

(11) **EP 1 807 806 B1**

(12) **EUROPEAN PATENT SPECIFICATION**

(45) Date of publication and mention
of the grant of the patent:
**06.04.2011 Bulletin 2011/14**

(51) Int Cl.:
***G06T 15/10*** (2011.01)

(21) Application number: **05819890.4**

(86) International application number:
**PCT/IB2005/053452**

(22) Date of filing: **21.10.2005**

(87) International publication number:
**WO 2006/046180 (04.05.2006 Gazette 2006/18)**

(54) **DISPARITY MAP**

DISPARITÄTSKARTE

CARTE DE DISPARITE

(84) Designated Contracting States:
**AT BE BG CH CY CZ DE DK EE ES FI FR GB GR HU IE IS IT LI LT LU LV MC NL PL PT RO SE SI SK TR**

(30) Priority: **26.10.2004 EP 04105305**

(43) Date of publication of application:
**18.07.2007 Bulletin 2007/29**

(73) Proprietor: **Koninklijke Philips Electronics N.V.
5621 BA Eindhoven (NL)**

(72) Inventors:
• **BERRETTY, Robert-Paul, M.
NL-5656 AA Eindhoven (NL)**
• **BARENBRUG, Bart, G., B.
NL-5656 AA Eindhoven (NL)**

(74) Representative: **Groenendaal, Antonius W. M.
Philips
Intellectual Property & Standards
P.O. Box 220
5600 AE Eindhoven (NL)**

(56) References cited:
**US-A1- 2004 032 980**

• **MEL SIEGEL: "just enough reality, microstereopsis, and the prospect of zoneless autostereoscopic displays" IMAGE PROCESSING, 2000. PROCEEDINGS. 2000 INTERNATIONAL CONFERENCE ON SEPTEMBER 10-13, 2000, PISCATAWAY, NJ, USA,IEEE, vol. 1, 10 September 2000 (2000-09-10), pages 9-12, XP010530537 ISBN: 0-7803-6297-7**
• **REDERT A: "Visualization of arbitrary-shaped 3D scenes on depth-limited 3D displays" 3D DATA PROCESSING, VISUALIZATION AND TRANSMISSION, 2004. 3DPVT 2004. PROCEEDINGS. 2ND INTERNATIONAL SYMPOSIUM ON THESSALONIKI, GREECE 6-9 SEPT. 2004, PISCATAWAY, NJ, USA,IEEE, 6 September 2004 (2004-09-06), pages 938-942, XP010725305 ISBN: 0-7695-2223-8**

**Description**

The invention relates to a method of computing an output disparity map, comprising output elements having output values corresponding to shifts to be applied to respective pixels of a first image to compute a second image, the computing on basis of an input disparity map comprising respective input elements having input values.

The invention further relates to a unit for computing an output disparity map, comprising output elements having output values corresponding to shifts to be applied to respective pixels of a first image to compute a second image, the computing on basis of an input disparity map comprising respective input elements having input values.

The invention further relates to an image processing apparatus comprising such a unit for computing an output disparity map.

The invention further relates to a computer program product to be loaded by a computer arrangement, comprising instructions to compute an output disparity map, comprising output elements having output values corresponding to shifts to be applied to respective pixels of a first image to compute a second image, the computing on basis of an input disparity map comprising respective input elements having input values.

Since the introduction of display devices, a realistic 3-D display device has been a dream for many. Many principles that should lead to such a display device have been investigated. Some principles try to create a realistic 3-D object in a certain volume. For instance, in the display device as disclosed in the article "Solid-state Multi-planar Volumetric Display", by A. Sullivan in proceedings of SID'03, 1531-1533, 2003, visual data is displaced at an array of planes by means of a fast projector. Each plane is a switchable diffuser. If the number of planes is sufficiently high the human brain integrates the picture and observes a realistic 3-D object. This principles allows a viewer to look around the object within some extend. In this display device all objects are (semi-)transparent.

Many others try to create a 3-D display device based on binocular disparity only. In these systems the left and right eye of the viewer perceives another image and consequently, the viewer perceives a 3-D image. An overview off these concepts can be found in the book "Stereo Computer Graphics and Other True 3-D Technologies", by D.F.McAllister (Ed.), Princeton University Press, 1993. A first principle uses shutter glasses in combination with for instance a CRT. If the odd frame is displayed, light is blocked for the left eye and if the even frame is displayed light is blocked for the right eye.

Display devices that show 3-D without the need for additional appliances are called auto-stereoscopic display devices.

A first glasses-free display device comprises a barrier to create cones of light aimed at the left and right eye of the viewer. The cones correspond for instance to the odd and even sub-pixel columns. By addressing these columns with the appropriate information, the viewer obtains different images in his left and right eye if he is positioned at the correct spot, and is able to perceive a 3-D picture.

A second glasses-free display device comprises an array of lenses to image the light of odd and even sub-pixel columns to the viewer's left and right eye.

The disadvantage of the above mentioned glasses-free display devices is that the viewer has to remain at a fixed position. To guide the viewer, indicators have been proposed to show the viewer that he is at the right position. See for instance United States patent US5986804 where a barrier plate is combined with a red and green led. In case the viewer is well positioned he sees a green light, and a red light otherwise.

To relieve the viewer of sitting at a fixed position, multi-view auto-stereoscopic display devices have been proposed. See for instance United States patent US6064424. In the display devices as disclosed in US6064424 a slanted lenticular is used, whereby the width of the lenticular is larger than two sub-pixels. In this way there are several images next to each other and the viewer has some freedom to move to the left and right.

In order to generate a 3D impression on a multi-view display device, images from different virtual view points have to be rendered. This requires either multiple input views or some 3D or depth information to be present. This depth information can be either recorded, generated from multiview camera systems or generated from conventional 2D video material. For generating depth information from 2D video several types of depth cues can be applied: such as structure from motion, focus information, geometric shapes and dynamic occlusion. The aim is to generate a dense depth map, i.e. per pixel a depth value. This depth map is subsequently used in rendering a multi-view image to give the viewer a depth impression. In the article "Synthesis of multi viewpoint images at non-intermediate positions" by P.A. Redert, E.A. Hendriks, and J. Biemond, in Proceedings of International Conference on Acoustics, Speech, and Signal Processing, Vol. IV, ISBN 0-8186-7919-0, pages 2749-2752, IEEE Computer Society, Los Alamitos, California, 1997 a method of extracting depth information and of rendering a multi-view image on basis of the input image and the depth map are disclosed. The multi-view image is a set of images, to be displayed by a multi-view display device to create a 3D impression. Typically, the images of the set are created on basis of an input image. Creating one of these images is done by shifting the pixels of the input image with respective amounts of shift. These amounts of shifts are called disparities. So, typically for each pixel there is a corresponding disparity value, together forming a disparity map. Disparity values and depth values are typically inversely related, i.e.:

$$S = \frac{C}{D} \hspace{6cm} (1)$$

with S being disparity, C a constant value and D being depth.

US patent application US2004/032980 A1 provides another method to generate depth based on characteristics such as size, color, speed of motion, shading, brightness, obscuration, focus and differences between previous and current and future images. The thus obtained depth maps associated with an image may be used to create a left and right image of a stereo pair through displacements based on the depth map, in the process leaving room for variation of the displacement direction and the forced parallax to suite requirements of the 3D display system. Suppose there is a image processing apparatus, e.g. a multi-view display device which is arranged to receive a signal representing a sequence of 2D images and corresponding depth maps and is arranged to convert that input into a sequence of multi-view images. Suppose that the multi-view display device is arranged to display 9 images simultaneously, i.e. each multi-view images comprises a set of 9 different images. The depth map is converted to a disparity map by a linear operation as specified in Equation 1 and applied to compute the multi-view images on basis of the capabilities of the multi-view display device and optionally on basis of user preferences. The conversion means that the range of depth values is mapped to a range of disparity values. For instance the depth values are in the range [50, 200] meter and the disparity values are in the range of [0,5] pixels. Typically this mapping corresponds to a linear scaling whereby the lowest value of the depth range is directly mapped to the lowest value of the disparity range and the highest value of the depth range is directly mapped to the highest value of the disparity map. Unfortunately this does not result in the best image quality of the multi-view image.

It is an object of the invention to provide method of the kind described in the opening paragraph resulting in a relatively high quality multi-view image when the output disparity map is used for computing the multi-view image, to be displayed on a multi-view display device.

This object of the invention is achieved by the method according to claim 1.

Multiview display devices are typically driven in such a way that a portion of the scene seems to be located in front of the plane of the screen of the display device and another portion to be located behind the plane of the screen. This results in an optimal use of the depth range of the display device. Due to crosstalk between the different images shown by the display device, objects that lie far from the plane of the screen, either in front or behind, appear blurry, because shifted versions of such parts of the scene are seen mixed. This effect is known as ghosting. However, objects that are located relatively close to the plane of the screen appear relatively sharp. Typically, important objects in a scene have to be visualized relatively sharp while less important objects may be visualized less sharp. The invention is based on this observation. That means that on basis of a predetermined criterion the input value of a particular input element is determined, whereby the predetermined criterion typically satisfies the condition that the particular input element corresponds to a relatively important object. The mapping of the input values of the input elements to respective output values of the output elements is such that the particular input element is mapped to a predetermined output value which is substantially equal to zero. The effect of this is that for rendering the different images of the multiview image no or substantially no pixel shifts have to be applied for the respective pixels corresponding to the particular input element. Applying no or substantially no pixel shifts results in being visible relatively close to the plane of the screen. As described above, that means that a relatively sharp representation is achieved. As a consequence, objects which have depth values, i.e. disparity values which differ relatively much from the value of the particular input element will be visualized more blurred.

In the method according to the invention, the predetermined criterion is based on the first image. That means that on basis of analyzing the luminance and/or color values of the first image the particular input value is established.

In the method according to the invention whereby the predetermined criterion is based on the first image, the predetermined criterion is that the particular input value belongs to a particular input element corresponding to a particular pixel of the first image having a relatively high sharpness value compared to other sharpness values of respective other pixels of the first image. Preferably, the sharpness value of the particular pixel is determined by computing a difference of the luminance and/or color value of the particular pixel and the luminance and/or color value of a neighboring pixel of the particular pixel. Typical images as acquired by a camera are such that a portion of the scene which was in focus of the image acquisition optics is relatively sharp, while other parts of the scene are relatively unsharp, i.e. blurred. An advantage of this embodiment of the method according to the invention is that the portion of the scene which was in focus during acquisition of the image is mapped to the plane of the screen of the display device. Other portions of the scene which were out of focus, will appear to be in front or behind the plane of the screen of the display device.

In an embodiment of the method according to the invention, the mapping function corresponds to adding or subtracting a constant value from the input values of the input elements, the constant value based on computing a difference between the input value of the particular input element and the predetermined output value. Typically, the difference between the input value and the predetermined output value corresponds to an offset which is used as a constant value to be added or subtracted depending on the sign of the offset.

In an embodiment of the method according to the invention, the particular input value is based on a combination of two further input values, whereby the two further input values are determined on basis of the predetermined criterion as described above. It may be that there are multiple objects in the scene which are both relevant but which have a difference disparity. Selecting one of these objects in or to render it relatively sharp on the multiview display device may result in rendering the other object much to blurred. Going for a compromise, i.e. both objects moderately sharp, is advantageous in such a situation. Typically, the combination is a weighted average of the two further input values.

In an embodiment of the method according to the invention, the mapping function is based on a sharpness map, comprising elements of sharpness values which are based on difference between corresponding pixels of the first image and their respective neighboring pixels. Typically not only an offset, as described above, is needed to define the mapping function, but also a scaling factor. It is advantageous to limit the output range and thus the scaling factor on basis of the sharpness of the input image. On basis of the intrinsic sharpness of the first image and corresponding disparity values an optimal scaling factor is determined according to this embodiment of the method according to the invention.

It is a further object of the invention to provide unit of the kind described in the opening paragraph resulting in a relatively high quality multi-view image when the output disparity map is used for computing the multi-view image, to be displayed on a multi-view display device.

This object of the invention is achieved by a unit according to claim 6. It is a further object of the invention to provide an image processing apparatus of the kind described in the opening paragraph resulting in a relatively high quality multi-view image when the output disparity map is used for computing the multi-view image, to be displayed on the image processing apparatus.

This object of the invention is achieved in that the image processing apparatus comprises the unit for computing an output disparity map, as claimed in Claim 7.

It is a further object of the invention to provide a computer program product of the kind described in the opening paragraph resulting in a relatively high quality multi-view image when the output disparity map is used for computing the multi-view image, to be displayed on a multi-view display device.

This object of the invention is achieved by the computer program product of claim 8.

Modifications of the unit for computing an output disparity map and variations thereof may correspond to modifications and variations thereof of the image processing apparatus, the method and the computer program product, being described.

These and other aspects of the unit for computing an output disparity map, of the image processing apparatus, of the method and of the computer program product, according to the invention will become apparent from and will be elucidated with respect to the implementations and embodiments described hereinafter and with reference to the accompanying drawings, wherein:

Fig. 1 schematically shows the unit for computing an output disparity map;
Fig. 2 schematically shows the range of the values of an input disparity map and the range of the values of an output disparity map;
Fig. 3 schematically shows a first embodiment of the unit for computing an output disparity map and a rendering unit;
Fig. 4 schematically shows a second embodiment of the unit for computing an output disparity map and a rendering unit;
Fig. 5 schematically shows a third embodiment of the unit for computing an output disparity map and a rendering unit; and
Fig. 6 schematically shows an image processing apparatus comprising a unit for computing an output disparity map according to the invention.

Same reference numerals are used to denote similar parts throughout the figures.

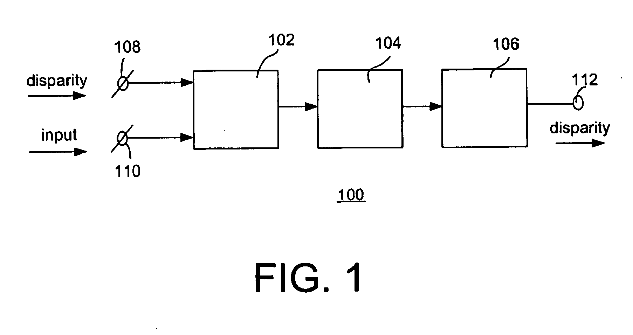

Fig. 1 schematically shows the unit 100 for computing an output disparity map on basis of an input disparity map comprising respective input elements having input values. The output disparity map comprises output elements having output values corresponding to shifts to be applied to respective pixels of a first image to compute a second image. These shifts may correspond to integer shifts. Alternatively, non-integer values are used, meaning that interpolation is needed to compute the pixel values or the second image. Typically, an input disparity map is provided at the input connector 108. Alternatively a depth map is provided at the input connector 108. In that case a conversion from the depth map to the input disparity map is performed by the unit 100 for computing an output disparity map.

The output disparity map is provided at the output connector 112. Optionally, a set of output disparity maps is provided, whereby the disparity maps of the set correspond to respective images of a multiview image.

The unit 100 for computing an output disparity map comprises:

- first determining means 102 for determining the input value of a particular input element of the input disparity map on basis of a predetermined criterion;
- second determining means 104 for determining a mapping function on basis of the input value of the particular input element, the mapping being function such that the input value of the particular input element is mapped to a predetermined output value which is substantially equal to zero; and
- mapping means 106 for mapping the input values of the input elements to respective output values of the output elements on basis of the mapping function.

The first determining means 102, the second determining means 104 and the mapping means 106 may be implemented using one processor. Normally, these functions are performed under control of a software program product. During execution, normally the software program product is loaded into a memory, like a RAM, and executed from there. The program may be loaded from a background memory, like a ROM, hard disk, or magnetical and/or optical storage, or may be loaded via a network like Internet. Optionally an application specific integrated circuit provides the disclosed functionality.

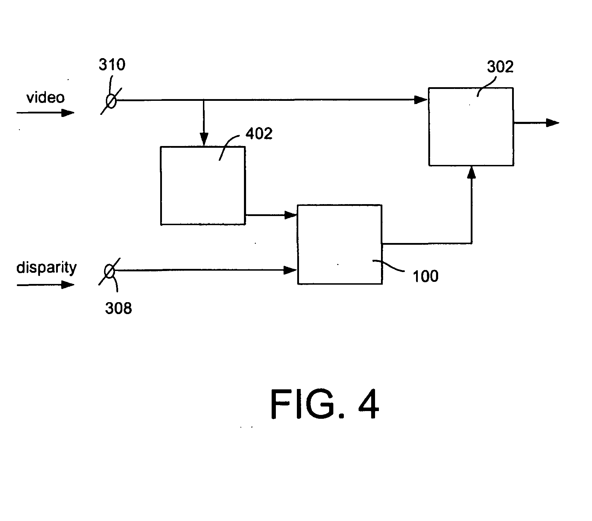

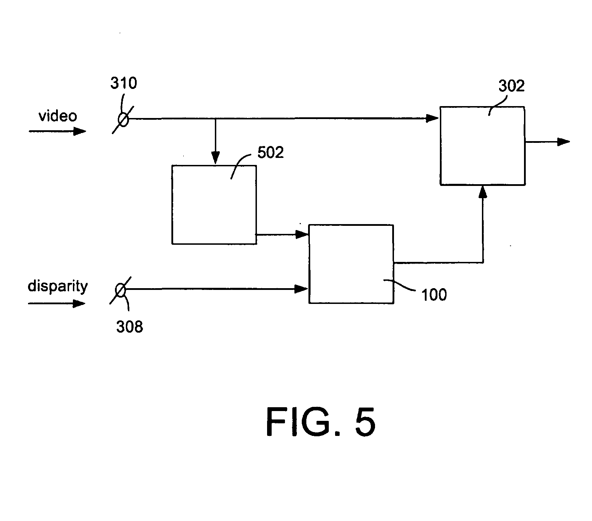

Optionally, the unit 100 for computing an output disparity map comprises a second input connector 110 for providing additional information, e.g. video data or motion vector fields as disclosed in Fig. 4 and Fig. 5, respectively.

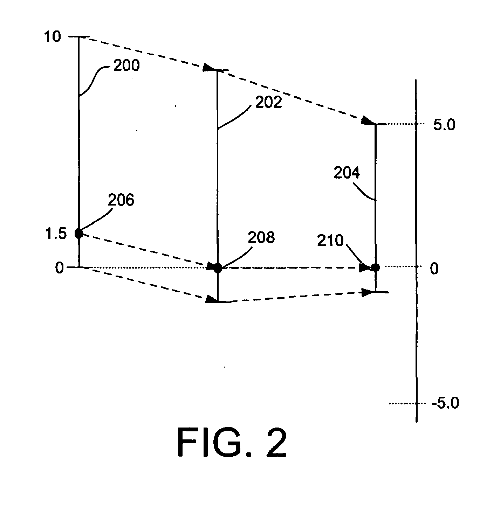

The mapping function may be any kind of operation for mapping the input elements to respective output elements. Typically, the input elements have values in an input range and the output elements have values in an output range, whereby the input range and the output range are different. Fig. 2 schematically shows the input range 200 of the values of an input disparity map and the output range 202 of the values of a first output disparity map and the output range of a second output disparity map. As can be seen in Fig. 2 the input elements of the input disparity map have values ranging from 0 to 10. Computing a first output disparity map comprises the following steps.

- first: the input value 206 of a particular element of the input disparity map is determined on basis of a predetermined criterion. In this case it appears that the input value 206 of the particular element equals 1.5.
- second: a mapping function is determined on basis of the input value 206 of the particular input element. The mapping function is such that the input value 208 of the particular input element is mapped to a predetermined output value 208 which is substantially equal to zero. In this case the mapping function is relatively easy. For that an offset is computed by computing the difference between the input value 206 and the output value 208. The offset is 1.5.

- third: the input values of the input elements are mapped to respective output values of the output elements on basis of the mapping function. That means that from each input element the offset being 1.5 is subtracted to compute the corresponding output element. The result is the first output disparity map.

Optionally, the first output disparity map 202 is scaled to a second output disparity map in order to map the range of values to a range 204 of values which are suitable for the display device or which corresponds to a user preference. It should be noted that the scaling should be such that no shift of the range takes place i.e. the particular value 210 of the second output disparity map corresponds to the output value 208 of the first output disparity map.

Preferably, the mapping function comprises a scaling which is based on a sharpness map, comprising elements of sharpness values which are based on differences between corresponding pixels of the first image and their respective neighboring pixels. If something is already unsharp then it is not a problem to give it a relatively large disparity, i.e. displaying it relatively remote from the plane of the screen of the display device. The additional unsharpness because of the relatively large disparity is hardly visible. However, objects which are relatively sharp should be rendered with a relatively small amount of disparity to prevent blurring.

To determine a scaling factor $G$ which can be applied to scale an input disparity map into an output disparity map the following strategy is preferred. Suppose there is a sharpness map comprising respective sharpness values for the pixels of an image and there is an input disparity map comprising respective disparity values for the pixels of the image. The sharpness value for a pixel with coordinates $(x,y)$ is indicated with $E(x,y)$ and the input disparity value for a pixel with coordinates $(x, y)$ is indicated with $S_{in}(x, y)$. Assume that for each sharpness value $E(i)$ there is an allowable maximum disparity value $S_{max}(i)$. That means that there is a function mapping a sharpness value to a maximum disparity value.

$$f(E(i)) = S_{max}(i) \qquad\qquad (2)$$

Typically the function is such that a relatively low sharpness value is mapped to a relatively high maximum disparity value. The function may be a linear function, e.g. as specified in equation 3.

$$f(E(i)) = C_1 E(i) + C_2$$

The relation between the allowable maximum disparity and the input disparity of a particular pixel is determined by the maximum allowable scale factor $g(x, y)$ for the particular pixel.

$$g(x,y) = \frac{S_{\max}(x,y)}{S_{in}(x,y)} = \frac{f(E(x,y))}{S_{in}(x,y)} = \frac{C_1 E(x,y) + C_2}{S_{in}(x,y)} \qquad (3)$$

In order to determine a scaling factor $G$ for the total input disparity map, one has to determine the minimum of the maximum allowable scale factors $g(x, y)$ of the input disparity map. Notice that a particular scale factor which is larger than the maximum scale factor for the particular pixel results in an output disparity value which is higher than the allowable maximum disparity value for that particular pixel. So, to find the scaling factor $G$ for the input disparity map the minimum $g(x, y)$ has to be established.

$$G = \min_{(x,y)}(g(x,y)) \qquad (4)$$

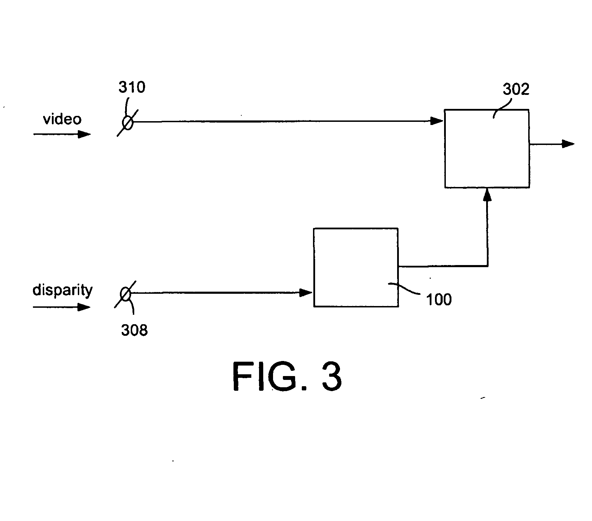

Fig. 3 schematically shows a first embodiment of the unit 100 for computing an output disparity map and a rendering unit 302. At the first input connector 310 video data is provided and at the second input connector 308 corresponding disparity data is provided. Typically that means that for each video frame a corresponding disparity map is provided or alternatively a depth map. The disparity map may be derived from the video data in an image processing apparatus comprising the unit 100. Alternatively, the disparity map is determined externally and provided in combination with the video data. The first embodiment of the unit 100 for computing an output disparity map is arranged to determine a set of 9 different output disparity maps for each received input disparity map. The rendering unit 302 is arranged to compute from each received input video image a multiview image comprising a set of 9 output images on basis of the set of 9 different output disparity maps.

The first embodiment of the unit 100 for computing an output disparity map is arranged to determine the mapping function on basis of the input disparity map. Preferably this is done by making a histogram of disparity values, i.e. counting the frequency of occurrence of the different disparity values. A next step is determining a particular value with a relatively high frequency of occurrence. This particular value should be mapped to the predetermined output value which is substantially equal to zero. With substantially equal to zero is meant the range of values corresponding to no or a limited shift to be applied for rendering such that the selected region of the images appears to be in the plane of the screen of the display device.

Instead of determining a particular value with a relatively high frequency of occurrence a limited set of such values could be selected, e.g. two or three values. Subsequently an average of this set of values is computed and used as the value to be mapped to the predetermined value, i.e. zero. Optionally, the respective determined frequency of occurrences are used for weighting the values in order to compute a weighted average.

Alternative to or in combination with determining a histogram of values, the first embodiment of the unit 100 for computing an output disparity map is arranged to determine the particular value to be mapped to the predetermined value on basis of an other predetermined criterion. The criterion may be selecting the particular value on basis of its coordinates, e.g. being located in the center or at the border of the image and thus input in the center or at the border disparity map, respectively.

In order to avoid certain changes in the consecutive disparity maps and resulting forward and backward movement of the scene, the consecutive input or output disparity maps are low-passed filtered, for example which an IIR filter with a half time of several video frames.

Fig. 4 schematically shows a second embodiment of the unit 100 for computing an output disparity map, a rendering unit 302 and an image content analyzing unit 402. Preferably the image content analyzing unit 402 is arranged to determine relatively important regions in the video images. From the application area of digital photography several auto-focus algorithms are known which use the pre-image as sensed by the camera to focus the scene on to the camera's sensor. Typically one or more areas in the pre-image are examined, and the focus is set to the configuration which maximizes the amount of high energy in the image. In a setting were rendering for multiview images is the issue, it is preferred that the plane of the screen is set to the depth corresponding to the sharpest areas in the image, since these were likely in focus when the original 2D image was acquired, and should stay m focus when rendering ior the multiview display device. Preferably the image content analysis unit 402 is arranged to determine a focus map. That means that for each pixel of the input image a focus of value is determined representing its relative sharpness or also called blur radius. A blur radius for a pixel is computed by examining the difference between the pixel and its neighboring pixels. A relatively high difference between luminance and/or color values means a relatively high sharpness value. Regions in the image having relatively many pixels with relatively high sharpness values are assumed to be important regions. From such a region a particular pixel is selected. E.g. the pixel being located in the center of such a region or the pixel having the highest sharpness value. The coordinates of this pixel are applied to select a particular element of the input disparity map. The value of the particular element is the value to be mapped to the predetermined value.

Fig. 5 schematically shows a third embodiment of the unit 100 for computing an output disparity map, a rendering unit 302 and a motion field analyzing unit 502. The motion field analyzing unit 502 comprises a motion estimator for computing motion vector fields on basis of consecutive images of the video data. The motion estimator is e.g. as specified in the article "True-Motion Estimation with 3-D Recursive Search Block Matching" by G. de Haan et al. in IEEE Transactions on circuits and systems for video technology, vol.3, no.5, October 1993, pages 368-379. The motion field analyzing unit 502 is arranged to analyze the motion vector field as computed by the motion estimator. Analyzing means for instance searching for motion vectors with a relatively high value or alternatively searching for motion vectors with a relatively low value. Preferably, the motion field analyzing 502 is arranged to determine a global motion model for the images. On basis of such a model it is possible to determine whether the sequence of images corresponds to tracking of a moving object. In that case the camera was following a moving object. The motion vectors for the background are relatively high and the low motion vectors correspond to the object. Then, a particular element of the input disparity map corresponding to one of the pixels for which such a relatively low motion vector has been determined is selected as the particular element of which the value has to be mapped to the predetermined output value.

Alternatively, the sequence of images corresponds to a static background in front of which an object moves. In that case a relatively high motion vector corresponds to a moving object. Then, a particular element of the input disparity map corresponding to one of the pixels for which such a relatively high motion vector has been determined is selected as the particular element of which the value has to be mapped to the predetermined output value.

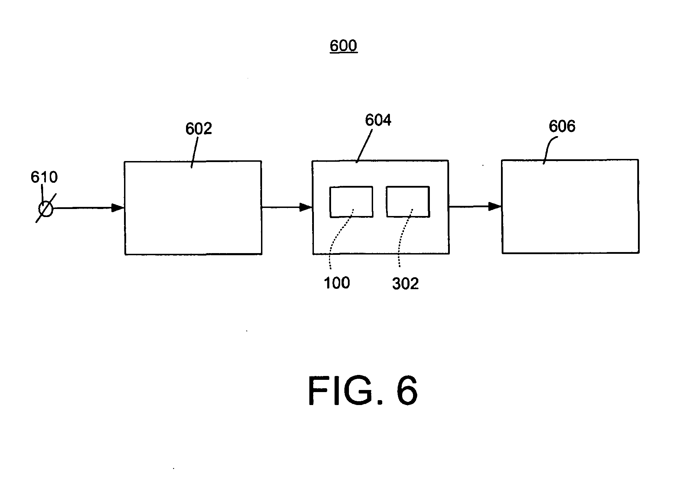

Fig. 6 schematically snows an image processing apparatus 600 comprising:

- receiving means 602 for receiving a signal representing video images;
- a combination of processing units 604, comprising the unit 100 for computing an output disparity map and the rendering unit 302 as disclosed in any of the Figs. 3-5; and a display device 606 for displaying the output images of rendering unit 302.

The signal may be a broadcast signal received via an antenna or cable but may also be a signal from a storage device like a VCR (Video Cassette Recorder) or Digital Versatile Disk (DVD). The signal is provided at the input connector 610. The image processing apparatus 600 might e.g. be a TV. Alternatively the image processing apparatus 600 does not comprise the optional display device but provides the output images to an apparatus that does comprise a display device 606. Then the image processing apparatus 600 might be e.g. a set top box, a satellite-tuner, a VCR player, a DVD player or recorder. Optionally the image processing apparatus 600 comprises storage means, like a hard-disk or means for storage on removable media, e.g. optical disks. The image processing apparatus 600 might also be a system being applied by a film-studio or broadcaster.

It should be noted that the above-mentioned embodiments illustrate rather than limit the invention and that those skilled in the art will be able to design alternative embodiments without departing from the scope of the appended claims. In the claims, any reference signs placed between parentheses shall not be constructed as limiting the claim. The word 'comprising' does not exclude the presence of elements or steps not listed in a claim. The word "a" or "an" preceding an element does not exclude the presence of a plurality of such elements. The invention can be implemented by means of hardware comprising several distinct elements and by means of a suitable programmed computer. In the unit claim enumerating several means, several of these means can be embodied by one and the same item of hardware. The usage of the words first, second and third, etcetera do not indicate any ordering. These words are to be interpreted as names.

## Claims

1. A method of computing an output disparity map, comprising output elements having output values corresponding to shifts to be applied to respective pixels of a first image to compute a second image, the computing on basis of an input disparity map comprising respective input elements having input values, the method comprising:

    - determining a particular input value (206) on basis of the input disparity map on basis of a predetermined criterion based on the first image, such that the particular input value corresponds to the areas with the highest sharpness in the first image;
- determining a mapping function on basis of the particular input value (206), the mapping function such that the particular input value (206) is mapped to a predetermined output value (208) which is equal to zero; and
- mapping the input values of the input elements to respective output values of the output elements on basis of the mapping function.

2. A method as claimed in Claim 1, whereby the mapping function corresponds to adding or subtracting a constant value from the input values of the input elements, the constant value based on computing a difference between the particular input value (206) and the predetermined output value (208).

3. A method as claimed in claim 1, whereby sharpness is determined using a focus map comprising a focus value for each pixel of the input image, whereby the sharpness value of a particular pixel is determined by computing a difference of the luminance and/or color value of the particular pixel and the luminance and/or color value of a neighboring pixel of the particular pixel.

4. A method as claimed in claim 1, whereby the mapping function comprises a scaling which is based on a sharpness map, comprising elements of sharpness values which are based on difference between corresponding pixels of the first image and their respective neighboring pixels.

5. A method as claimed in claim 4, whereby the mapping function comprises a clipping which is based on the sharpness map.

6. A unit for computing an output disparity map, comprising output elements having output values corresponding to shifts to be applied to respective pixels of a first image to compute a second image, the computing on basis of an input disparity map comprising respective input elements having input values, the unit comprising:

- first determining means (102) for determining a particular input value (206) on basis of the input disparity map on basis of a predetermined criterion based on the first image, such that the particular input value corresponds to the areas with the highest sharpness in the first image;
- second determining means (104) for determining a mapping function on basis of the particular input value (206), the mapping function such that the particular input value (206) is mapped to a predetermined output value (208) which is equal to zero; and
- mapping means (106) for mapping the input values of the input elements to respective output values of the output elements on basis of the mapping function.

7. An image processing apparatus comprising:

- receiving means (602) for receiving a signal corresponding to a first image;
- a unit for computing an output disparity map (100), as claimed in Claim 6; and
- rendering means (302) for computing the second image on basis of the first image and the output disparity map.

8. A computer program product to be loaded by a computer arrangement, comprising instructions to compute an output disparity map, comprising output elements having output values corresponding to shifts to be applied to respective pixels of a first image to compute a second image, the computing on basis of an input disparity map comprising respective input elements having input values, the computer arrangement comprising processing means and a memory, the computer program product, after being loaded, providing said processing means with the capability to carry out:

- determining a particular input value (206) on basis of the input disparity map on basis of a predetermined criterion based on the first image, such that the particular input value corresponds to the areas with the highest sharpness in the first image;
- determining a mapping function on basis of the particular input value (206), the mapping function such that the particular input value (206) is mapped to a predetermined output value (208) which is equal to zero; and
- mapping the input values of the input elements to respective output values of the output elements on basis of the mapping function.

**Patentansprüche**

1. Verfahren zur Berechnung einer Ausgangsdisparitätskarte, die Ausgangselemente mit Ausgangswerten entsprechend Verschiebungen, die zur Berechnung eines zweiten Bildes auf jeweilige Pixel eines ersten Bildes anzuwenden sind, umfasst, wobei die Berechnung auf der Grundlage einer Eingangsdisparitätskarte jeweilige Eingangselemente mit Eingangswerten umfasst, wobei das Verfahren die folgenden Schritte umfasst:

   - Ermitteln eines bestimmten Eingangswertes (206) auf der Grundlage der Eingangsdisparitätskarte, basierend auf einem vorgegebenen Kriterium auf der Basis des ersten Bildes, so dass der bestimmte Eingangswert den Flächen mit der größten Schärfe in dem ersten Bild entspricht;
   - Ermitteln einer Zuordnungsfunktion auf der Grundlage des bestimmten Eingangswertes (206), wobei bei der Zuordnungsfunktion der bestimmte Eingangswert (206) einem vorgegebenen Ausgangswert (208), der gleich Null ist, zugeordnet wird; sowie
   - Zuordnen der Eingangswerte der Eingangselemente zu jeweiligen Ausgangswerten der Ausgangselemente auf der Grundlage der Zuordnungsfunktion.

2. Verfahren nach Anspruch 1, wobei die Zuordnungsfunktion dem Addieren oder Subtrahieren eines konstanten Wertes von den Eingangswerten der Eingangselemente entspricht, wobei der konstante Wert auf der Berechnung einer Differenz zwischen dem bestimmten Eingangswert (206) und dem vorgegebenen Ausgangswert (208) basiert.

3. Verfahren nach Anspruch 1, wobei die Schärfe unter Verwendung einer Fokuskarte (Focus Map) mit einem Fokuswert für jedes Pixel des Eingangsbildes ermittelt wird, wobei der Schärfewert eines bestimmten Pixels durch Berechnung einer Differenz der Luminanz und/oder des Farbwertes des bestimmten Pixels und der Luminanz und/oder des Farbwertes eines benachbarten Pixels des bestimmten Pixels ermittelt wird.

4. Verfahren nach Anspruch 1, wobei die Zuordnungsfunktion eine Skalierung umfasst, die auf einer Schärfekarte basiert, die Elemente von Schärfewerten umfasst, die auf der Differenz zwischen entsprechenden Pixeln des ersten Bildes und deren benachbarten Pixeln basieren.

5. Verfahren nach Anspruch 4, wobei die Zuordnungsfunktion ein Clipping umfasst, das auf der Schärfekarte basiert.

6. Einheit zur Berechnung einer Ausgangsdisparitätskarte, die Ausgangselemente mit Ausgangswerten entsprechend Verschiebungen, die zur Berechnung eines zweiten Bildes auf jeweilige Pixel eines ersten Bildes anzuwenden sind, umfasst, wobei die Berechnung auf der Grundlage einer Eingangsdisparitätskarte jeweilige Eingangselemente mit Eingangswerten umfasst, wobei die Einheit umfasst:

   - erste Ermittlungsmittel (102) zum Ermitteln eines bestimmten Eingangswertes (206) auf der Grundlage der Eingangsdisparitätskarte, basierend auf einem vorgegebenen Kriterium auf der Basis des ersten Bildes, so dass der bestimmte Eingangswert den Flächen mit der größten Schärfe in dem ersten Bild entspricht;
   - zweite Ermittlungsmittel (104) zum Ermitteln einer Zuordnungsfunktion auf der Grundlage des bestimmten Eingangswertes (206), wobei bei der Zuordnungsfunktion der bestimmte Eingangswert (206) einem vorgegebenen Ausgangswert (208), der gleich Null ist, zugeordnet wird; sowie
   - Zuordnungsmittel (106) zum Zuordnen der Eingangswerte der Eingangselemente zu jeweiligen Ausgangswerten der Ausgangselemente auf der Grundlage der Zuordnungsfunktion.

7. Bildbearbeitungsgerät mit:

   - Empfangsmitteln (602) zum Empfang eines einem ersten Bild entsprechenden Signals;
   - einer Einheit zur Berechnung einer Ausgangsdisparitätskarte (100) nach Anspruch 6; sowie
   - Wiedergabemitteln (302) zur Berechnung des zweiten Bildes auf der Grundlage des ersten Bildes und der Ausgangsdisparitätskarte.

8. Computerprogrammprodukt, das von einer Computeranordnung zu laden ist. mit Befehlen zur Berechnung einer Ausgangsdisparitätskarte, die Ausgangselemente mit Ausgangswerten entsprechend Verschiebungen, die zur Berechnung eines zweiten Bildes auf jeweilige Pixel eines ersten Bildes anzuwenden sind, umfasst, wobei die Berechnung auf der Grundlage einer Eingangsdisparitätskarte jeweilige Eingangselemente mit Eingangswerten umfasst, wobei die Computeranordnung Bearbeitungsmittel und einen Speicher umfasst, wobei das Computerprogrammprodukt, nachdem es geladen wurde, die Bearbeitungsmittel mit der Fähigkeit versieht, folgende Schritte auszuführen:

- Ermitteln eines bestimmten Eingangswertes (206) auf der Grundlage der Eingangsdisparitätskarte, basierend auf einem vorgegebenen Kriterium auf der Basis des ersten Bildes, so dass der bestimmte Eingangswert den Flächen mit der größten Schärfe in dem ersten Bild entspricht;
- Ermitteln einer Zuordnungsfunktion auf der Grundlage des bestimmten Eingangswertes (206), wobei bei der Zuordnungsfunktion der bestimmte Eingangswert (206) einem vorgegebenen Ausgangswert (208), der gleich Null ist, zugeordnet wird; sowie
- Zuordnen der Eingangswerte der Eingangselemente zu jeweiligen Ausgangswerten der Ausgangselemente auf der Grundlage der Zuordnungsfunktion.

**Revendications**

1. Procédé de calcul d'une carte de disparité de sortie, comprenant des éléments de sortie ayant des valeurs de sortie correspondant à des décalages à appliquer à des pixels respectifs d'une première image pour calculer une deuxième image, le calcul sur base d'une carte de disparité d'entrée comprenant les éléments d'entrée respectifs ayant des valeurs d'entrée, le procédé comprenant :

- la détermination d'une valeur d'entrée particulière (206) sur base de la carte de disparité d'entrée sur base d'un critère prédéterminé basé sur la première image, de telle sorte que la valeur d'entrée particulière correspond aux zones avec la netteté la plus élevée dans la première image ;
- la détermination d'une fonction de cartographie sur base de la valeur d'entrée particulière (206), la fonction de cartographie telle que la valeur d'entrée particulière (206) est cartographiée à une valeur de sortie prédéterminée (208) qui est égale à zéro ; et
- la cartographie des valeurs d'entrée des éléments d'entrée aux valeurs de sortie respectives des éléments de sortie sur base de la fonction de cartographie.

2. Procédé selon la revendication 1, par lequel la fonction de cartographie correspond à l'ajout ou à la soustraction d'une valeur constante des valeurs d'entrée des éléments d'entrée, la valeur constante basée sur un calcul d'une différence entre la valeur d'entrée particulière (206) et la valeur de sortie prédéterminée (208).

3. Procédé selon la revendication 1, par lequel la netteté est déterminée en utilisant une carte de mise au point comprenant une valeur de mise au point pour chaque pixel de l'image d'entrée, par lequel la valeur de netteté d'un pixel particulier est déterminée en calculant une différence de la valeur de luminance et/ou de couleur du pixel particulier et de la valeur de luminance et/ou de couleur d'un pixel voisin du pixel particulier.

4. Procédé selon la revendication 1, par lequel la fonction de cartographie comprend une mise à l'échelle qui est basée sur une carte de netteté, comprenant des éléments de valeur de netteté qui sont basés sur une différence entre des pixels correspondants de la première image et leurs pixels voisins respectifs.

5. Procédé selon la revendication 4, par lequel la fonction de cartographie comprend un écrêtage qui est basé sur la carte de netteté.

6. Unité de calcul d'une carte de disparité de sortie, comprenant des éléments de sortie ayant des valeurs de sortie correspondant à des décalages à appliquer à des pixels respectifs d'une première image pour calculer une deuxième image, le calcul sur base d'une carte de disparité d'entrée comprenant les éléments d'entrée respectifs ayant des valeurs d'entrée, l'unité comprenant :

- un premier moyen de détermination (102) pour la détermination d'une valeur d'entrée particulière (206) sur base de la carte de disparité d'entrée sur base d'un critère prédéterminé basé sur la première image, de telle sorte que la valeur d'entrée particulière correspond aux zones avec la netteté la plus élevée dans la première image ;
- un deuxième moyen de détermination (104) pour la détermination d'une fonction de cartographie sur base de la valeur d'entrée particulière (206), la fonction de cartographie telle que la valeur d'entrée particulière (206) est cartographiée à une valeur de sortie prédéterminée (208) qui est égale à zéro ; et
- un moyen de cartographie (106) pour la cartographie des valeurs d'entrée des éléments d'entrée aux valeurs de sortie respectives des éléments de sortie sur base de la fonction de cartographie.

**7.** Appareil de traitement d'image comprenant :

- un moyen de réception (602) destiné à recevoir un signal correspondant à une première image ;
- une unité destinée au calcul d'une carte de disparité de sortie (100), selon la revendication 6 ; et
- un moyen de rendu (302) destiné à calculer la deuxième image sur base de la première image et de la carte de disparité de sortie.

**8.** Programme logiciel destiné à être chargé par un système informatique, comprenant des instructions pour calculer une carte de disparité de sortie, comprenant des éléments de sortie ayant des valeurs de sortie correspondant à des décalages à appliquer à des pixels respectifs d'une première image pour calculer une deuxième image, le calcul sur base d'une carte de disparité d'entrée comprenant des éléments d'entrée respectifs ayant des valeurs d'entrée, le système informatique comprenant un moyen de traitement et une mémoire, le programme logiciel, après avoir été chargé, fournissant audit moyen de traitement la possibilité d'effectuer :

- la détermination d'une valeur d'entrée particulière (206) sur base de la carte de disparité d'entrée sur base d'un critère prédéterminé basé sur la première image, de telle sorte que la valeur d'entrée particulière correspond aux zones avec la netteté la plus élevée dans la première image ;
- la détermination d'une fonction de cartographie sur base de la valeur d'entrée particulière (206), la fonction de cartographie telle que la valeur d'entrée particulière (206) est cartographiée à une valeur de sortie prédéterminée (208) qui est égale à zéro ; et
- la cartographie des valeurs d'entrée des éléments d'entrée aux valeurs de sortie respectives des éléments de sortie sur base de la fonction de cartographie.

FIG. 1

FIG. 2

FIG. 3

FIG. 4

EP 1 807 806 B1

FIG. 5

FIG. 6

EP 1 807 806 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5986804 A
- US 6064424 A
- US 2004032980 A1

**Non-patent literature cited in the description**

- **A. Sullivan.** Solid-state Multi-planar Volumetric Display. *SID'03,* 2003, 1531-1533
- Stereo Computer Graphics and Other True 3-D Technologies. Princeton University Press, 1993
- **P.A. Redert ; E.A. Hendriks ; J. Biemond.** Synthesis of multi viewpoint images at non-intermediate positions. *Proceedings of International Conference on Acoustics, Speech, and Signal Processing,* 1997, vol. IV, ISBN 0-8186-7919-0, 2749-2752
- **G. de Haan et al.** True-Motion Estimation with 3-D Recursive Search Block Matching. *IEEE Transactions on circuits and systems for video technology,* October 1993, vol. 3 (5), 368-379